Europäisches Patentamt

European Patent Office

Office européen des brevets

(19)

(11) Numéro de publication : **0 444 995 A1**

(12) # DEMANDE DE BREVET EUROPEEN

(21) Numéro de dépôt : **91400389.2**

(22) Date de dépôt : **15.02.91**

(51) Int. Cl.⁵ : **B01D 53/04**

(30) Priorité : 02.03.90 FR 9002615

(43) Date de publication de la demande :
04.09.91 Bulletin 91/36

(84) Etats contractants désignés :
**BE DE ES FR IT**

(71) Demandeur : **L'AIR LIQUIDE, SOCIETE
ANONYME POUR L'ETUDE ET
L'EXPLOITATION DES PROCEDES GEORGES
CLAUDE
75, Quai d'Orsay
F-75321 Paris Cédex 07 (FR)**

(72) Inventeur : **Diot, Christian
11, rue du Noisetier, Clos Notre-Dame
F-77340 Pontault Combault (FR)**
Inventeur : **Larrieu, Dominique
48, rue de la Sourderie
F-78180 Montigny-le-Bretonneux (FR)**
Inventeur : **Rivero, Alain
4, rue Henri de Bournazel
F-75014 Paris (FR)**
Inventeur : **Vigor, Xavier
27-29, rue Rieussec
F-78220 Viroflay (FR)**

(74) Mandataire : **Le Moenner, Gabriel et al
L'AIR LIQUIDE, Société Anonyme pour l'étude
et l'exploitation des procédés Georges Claude
75, Quai d'Orsay
F-75321 Paris Cédex 07 (FR)**

(54) Enceinte et installation d'adsorption pour séparation des mélanges gazeux.

(57) Enceinte d'adsorption (11) pour séparation d'un constituant d'un mélange gazeux, du genre à structure allongée incorporant au moins un produit adsorbant (28) sous forme granulaire et présentant des moyens d'admission et de soutirage gazeux assurant une circulation du gaz dans le sens longitudinal (F ;F') de ladite enceinte à structure allongée (11), caractérisée en ce que ladite enceinte est une bouteille de gaz (11) avec un fond fermé (14) et une paroi latérale cylindrique (13) se rétrécissant en un col (15) équipé de moyens d'admission-soutirage sous forme d'une tête d'admission-soutirage avec un premier passage axial s'étendant en un tube plongeur (25) aboutissant jusqu'à faible distance du fond de bouteille (14) et un second passage (26) débouchant à l'intérieur de la bouteille le au niveau dudit col de bouteille (15).
Application à la séparation de mélanges gazeux, notamment à la production d'hydrogène.

EP 0 444 995 A1

Jouve, 18, rue Saint-Denis, 75001 PARIS

FIG.1

## ENCEINTE ET INSTALLATION D'ADSORPTION POUR SEPARATION DES MELANGES GAZEUX

La présente invention concerne une enceinte d'adsorption pour séparation d'un constituant d'un mélange gazeux, du genre à structure allongée incorporant au moins un produit adsorbant sous forme granulaire et présentant des moyens d'admission et de soutirage gazeux assurant une circulation du gaz dans le sens longitudinal de ladite enceinte.

De telles enceintes d'adsorption sont généralement mises en oeuvre dans un procédé cyclique de régénération du produits adsorbant par variation de pression (type "PSA") et à cet effet se présentent dans une installation sous forme d'une ou plusieurs colonnes disposées verticalement ou horizontalement, chacune étant équipée de moyens d'admission de gaz à une extrémité de colonne et de moyens de soutirage du gaz à l'autre extrémité de colonne.

De telles colonnes sont réalisées à la demande pour une installation donnée, si bien que leur coût est substantiel, car des réalisations identiques sont faites en très petit nombre, voire à exemplaire unique, de sorte qu'on est loin des coûts de fabrication que l'on pourrait obtenir si ce genre d'enceintes d'adsorption pouvait être réalisée en grande série.

La présente invention a pour objet une enceinte d'adsorption dont le coût de fabrication peut être substantiellement abaissé à un niveau minimal, car sa structure d'enceinte est normalement réalisée en très grand nombre pour d'autres applications dans le domaine des gaz. Selon l'invention, une enceinte est une bouteille pour gaz avec un fond fermé et une paroi latérale cylindrique se terminant par un col, qui est équipé de moyens d'admission-soutirage sous forme d'une tête d'admission-soutirage avec un premier passage axial s'étendant en un tube plongeur à faible distance du fond de bouteille et un second passage débouchant à l'intérieur de la bouteille au niveau dudit col de bouteille. C'est donc des bouteilles à gaz tout à fait classiques qui sont mises en oeuvre par l'invention, que l'on emplit simplement de produit granulé adsorbant, et que l'on équipe de moyens d'admission et de soutirage aptes à assurer une circulation longitudinale des gaz depuis le col vers le fond ou vice-versa. De telles bouteilles sont fabriquées à la chaîne par quelques constructeurs avec des dimensions normalisées concernant le diamètre (généralement compris entre 200 et 300 mm), la hauteur (généralement comprise entre 1000 et 2000 mm), la contenance (généralement entre 20 litres et 100 litres), le diamètre intérieur de col (entre 15 et 35 mm, généralement de forme conique convergeant vers l'intérieur de la bouteille), avec un fond concave, ou convexe ou plat, le tout de façon à contenir de petits volumes de gaz sous pression (de l'ordre de 10 Nm$^3$ sous 200 bar).

L'adaptation d'une telle bouteille classique en bouteille d'adsorption nécessite la mise en place du produit granulé et ensuite de la tête d'admission-soutirage à tube plongeur, en sorte que l'on doit, lors de l'introduction du produit adsorbant granulé, tenir compte du volume d'occupation ultérieure du tube plongeur, et, dans les cas où la bouteille est utilisée avec le fond en haut, d'un volume supplémentaire de sommet libre de tout produit granulaire, dans lequel débouche le tube plongeur et servant de chambre de répartition du gaz qui est soit délivré par le tube plongeur, soit soutiré et collecté parle tube plongeur.

On détaille maintenant certaines formes de réalisation particulières d'une bouteille d'adsorption selon l'invention qui peuvent être mises en oeuvre séparément ou en toute combinaison :

– Avantageusement, le second passage est annulaire et coaxial extérieurement audit tube plongeur formant ledit premier passage ;

– Le tube plongeur se termine près du fond de bouteille au moyen d'une pluralité de débouchés de dimension inférieure à la dimension d'un granulé adsorbant ;

– Le tube plongeur se termine au voisinage immédiat du fond par une partie de section transversale progressivement restreinte ;

– Le tube plongeur est constitué de deux tubes coulissant l'un dans l'autre avec une extension longitudinale totale substantiellement égale à la hauteur de la bouteille ;

– Le moyen d'admission est adapté pour correspondre au premier passage du tube plongeur, tandis que le moyen de soutirage est adapté pour correspondre au second passage au niveau du col de bouteille, ou à l'inverse, le moyen d'admission est adapté pour correspondre au second passage au niveau du col, tandis que le moyen de soutirage est adapté pour correspondre au premier passage du tube plongeur;

– Le passage d'admission est de plus forte section que le passage de soutirage ;

L'invention a également pour objet une installation de séparation d'un mélange gazeux, du genre comprenant une pluralité d'enceintes d'adsorption, le cas échéant une capacité de stockage de mélange gazeux à traiter, le cas échéant une capacité de stockage du gaz traité, le cas échéant une capacité de stockage de gaz d'élution-purge ou autres capacités nécessaires à un cycle quelconque à variation de pression type PSA, le tout interconnecté par conduites et vannes de façon à assurer, séquentiellement et pour chaque enceinte d'adsorption, une étape de production à pression, une étape de dépressurisation, le cas échéant une étape d'élution-purge à pression basse, une étape de repressurisation à pression et qui se caractérise en ce que les dites enceintes d'adsorption et les éventuelles capacités de stockage sont formées d'une pluralité de bouteilles de dimensions normalisées, le cas échéant groupées sur des rampes d'admission-soutirage, les bouteilles formant enceintes d'adsorption étant du type décrit précédemment.

La réalisation des bouteilles d'adsorption à partir de bouteille du commerce, de capacité relativement faible, conduit donc à constituer des ensembles modulaires à une ou plusieurs bouteilles d'adsorption, généralement (mais pas nécessairement) associées à une pluralité de bouteilles de stockage, réparties en nombre approprié selon qu'il s'agit du stockage du mélange à traiter, du stockage du mélange traité, ou du stockage d'un gaz d'élution ou autre stockage, le tout pouvant être logé dans un cadre-support unique.

L'invention est maintenant décrite, à titre d'exemple, en référence aux dessins annexés dans lesquels :

— la figure 1 est une vue en coupe, avec arrachement de la partie centrale, d'une bouteille d'adsorption selon l'invention, fonctionnant en position fond en bas ;
— la figure 2 est une vue identique à la figure 1 d'une bouteille fonctionnant fond en haut ;
— la figure 3 est une vue shématique d'une installation d'adsorption selon l'invention.

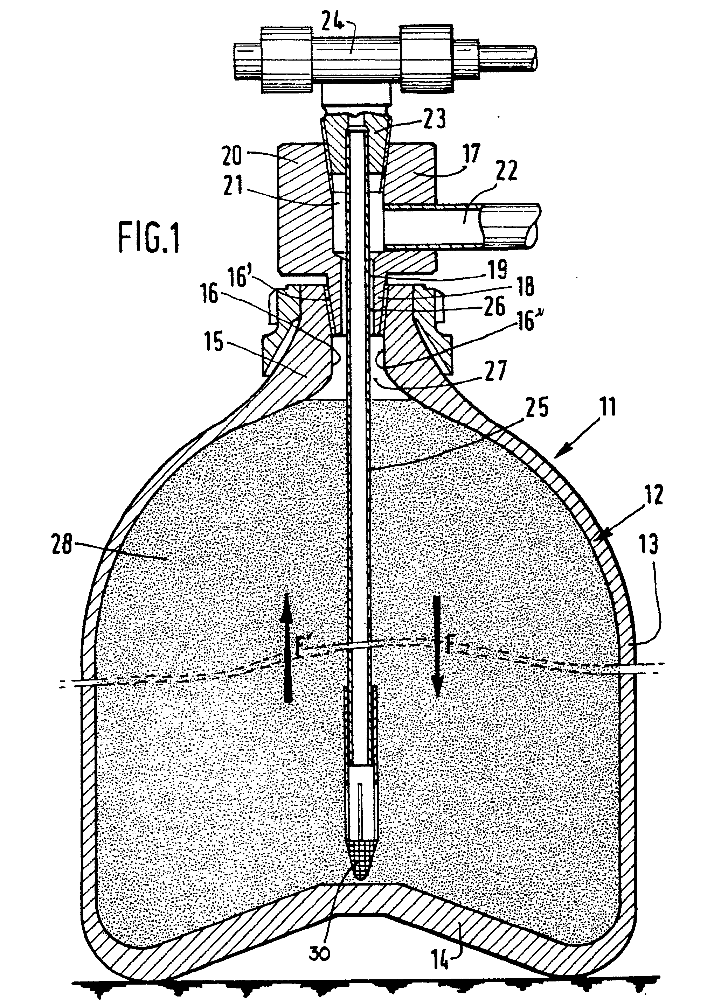

En se référant à la figure 1, une bouteille d'adsorption 11 est formée d'une bouteille proprement dite, de forme classique 12 avec une paroi latérale 13 et un fond 14 qui est ici représenté avec une forme concave, mais qui pourrait être convexe ou plat. La paroi latérale 13 se restreint vers le haut en un col 15 formant un passage 16 ayant une partie d'entrée de forme conique 16' suivi, vers l'intérieur de la bouteille, d'un passage cylindrique 16".

Une tête d'admission-soutirage 17 est montée dans le col 15 et cette tête 17 comporte à cet effet un embout 18 engagé à filetage dans la partie 16', dans laquelle il est maintenu à étanchéité. Cet embout 18 à passage axial 19 se prolonge en un large corps 20 avec un passage axial débouchant en une cavité 21 communiquant avec un passage transversal 22. Dans l'extrémité haute du passage axial 21 est monté à filetage et à étanchéité un noyau 23 solidaire d'une rampe 24 et portant un tube plongeur 25 s'engageant à interstice au travers du passage 19 de l'embout 18 jusqu'à ce que son extrémité 30 aboutisse à très faible distance du fond 14 de la bouteille 12. Grâce à cette disposition, on réalise d'une part un premier passage de gaz via la rampe 24, le noyau 23, le tube plongeur 25 s'étendant d'une extrémité externe au travers du col de bouteille 15 jusqu'au voisinage immédiat du fond de bouteille 14, d'autre part un second passage via le conduit 22, l'espace interstitiel 26 entre passages 21 - 19 et tube plongeur 25 pour déboucher immédiatement en 27 intérieurement au voisinage du col 15.

Une telle bouteille d'adsorption 11 est réalisée d'abord en remplissant la bouteille proprement dite (démunie de sa tête d'admission-soutirage) avec du produit granulé adsorbant 28, de façon à cependant laisser un volume libre permettant l'insertion ultérieure du tube plongeur 25 de la tête d'admission-soutirage.

Dans la mise en oeuvre représentée à la figure 1, la bouteille d'adsorption fonctionne le fond en bas et le gaz à traiter est introduit par le conduit 22 pour passer dans le second passage 26 au sommet de l'adsorbant et s'écouler de façon descendante selon la flèche F au travers de la masse adsorbante 28, et être collecté à l'extrémité basse 30 du tube plongeur 25 qui véhicule le gaz traité vers la rampe de soutirage 24. Dans cette forme de mise en oeuvre, le passage interstitiel 26 d'admission de gaz à traiter est de section supérieure à la section intérieure du tube plongeur 25 formant passage de soutirage, et de préférence dans le rapport des débits admis et soutiré (ce dernier étant inférieur au débit admis d'une valeur égale au débit de gaz piégé dans l'adsorbant ).

Au contraire, si le premier passage formé par le tube plongeur 25 sert de passage d'admission (gaz circulant de façon ascendante dans la masse adsorbante selon la flèche F' pour être collecté au niveau du second passage 26 servant de passage de soutirage), c'est la section du tube plongeur 25 qui serait supérieure à la section du passage annulaire 26.

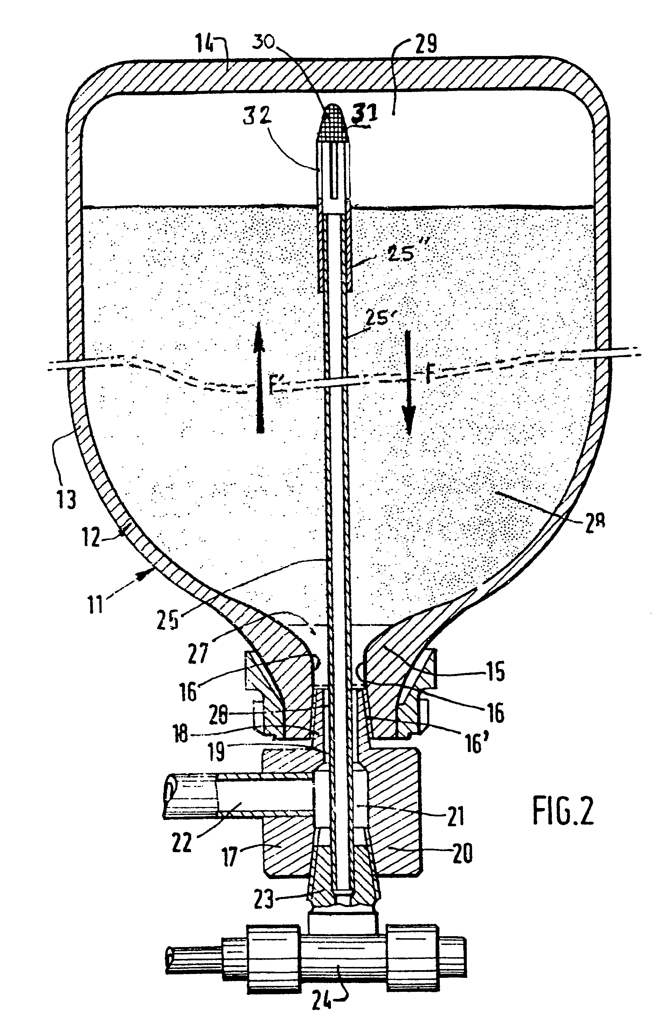

Selon la figure 2, une bouteille d'adsorption du même type à fond plat 14 est ici placée toujours verticalement, mais avec le fond 14 en position haute et la tête d'admission-soutirage en position basse. A la différence du cas précédent, on a introduit un peu moins de granulé adsorbant, de façon à ménager une zone haute de distribution gazeuse 29 libre de tout granulé, dans laquelle émerge l'extrémité 30 du tube plongeur 25. Dans cette réalisation également, le gaz peut être admis par le tube plongeur 25 (circulation descendante selon la flèche F), ou collecté par le tube plongeur 25 (circulation ascendante selon la flèche F').

Le tube plongeur 25 peut être réalisé de deux tubes concentriques 25' et 25" coulissant l'un dans l'autre et de préférence sa partie terminale 30 est de forme conique pour faciliter l'insertion du tube dans la masse de granulé adsorbant. Il est pourvu à son extrémité d'orifices de faible diamètre 31 et/ou de fentes étroites 32 évitant tout risque d'introduction de granulés adsorbants.

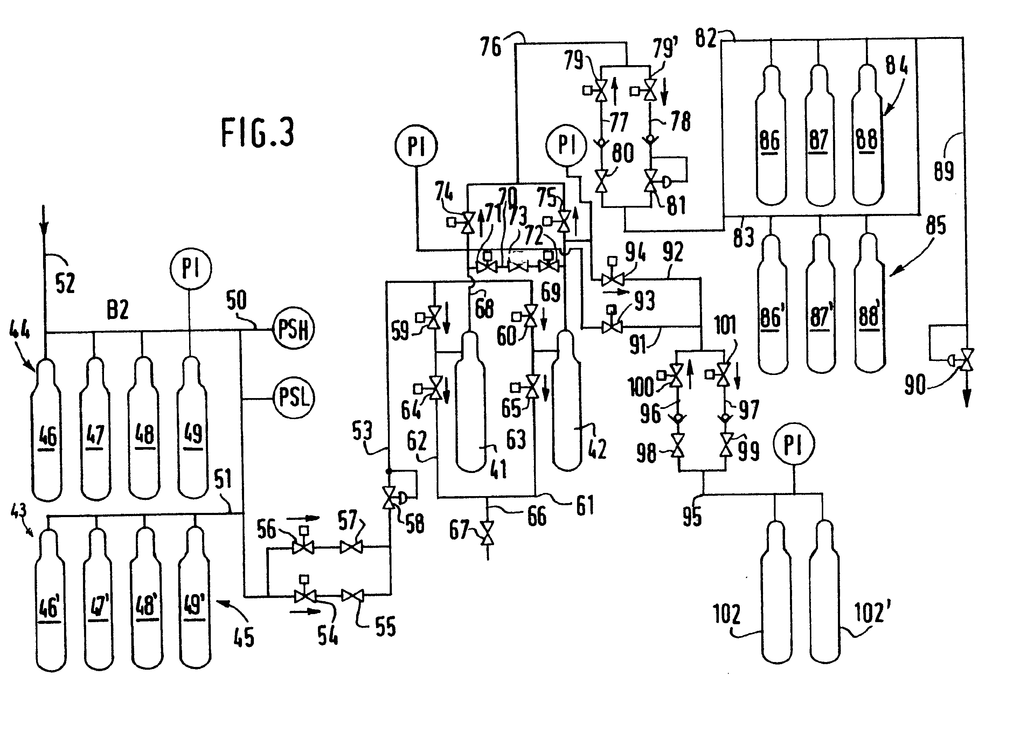

En se référant à la figure 3, une installation d'épuration est ici équipée de deux bouteilles d'adsorption 41, 42, d'une capacité de stockage de gaz à traiter 43 formée de deux groupes 44 et 45 chacun comprenant quatre bouteilles 46, 47, 48, 49 (46', 47', 48', 49') branchées en parallèle sur deux rampes distributrices 50 et 51, raccordées à une conduite d'alimentation 52 et à une conduite de liaison 53 aux bouteilles 41 et 42, incorporant un circuit de charge à électro-vanne 54 et limiteur de débit 55 en parallèle sur un circuit de recompression à électro-vanne 56 et limiteur de débit 57, un régulateur de pression 58 (qui peut être remplacé par un régulateur débitmétrique) des vannes d'entrée 59, 60 vers les bouteilles 41, 42 respectivement.

Un circuit de gaz résiduaire 61 incorpore, pour chaque bouteille 41, 42, des conduites individuelles 62, (63) à électro-vannes 64, (65) et une conduite commune de décharge 66 à limiteur de débit 67.

Un circuit de gaz de production incorpore des conduites 68, 69 pontées par une conduite 70 à vannes 71, 72 et limiteur de débit 73, et se poursuivant par des électro-vannes 74 et 75 vers une conduite commune à double circuit en parallèle, 77 (78), incorporant chacune deux vannes 79 et 79', un régulateur de débit 80 sur la ligne 77 et un régulateur de pression (ou de débit) 81 sur la ligne 78, pour aboutir à deux rampes 82, 83 desservant chacun un groupe 84 (85) de trois bouteilles 86, 87, 88 (86', 87', 88') de stockage de gaz traité, raccordé à un collecteur commun 89 de production de gaz traité à régulateur 90.

Les conduites de production 68, 69 sont raccordées chacune par une conduite 91 (92) à vanne 93 (94) à une conduite commune 95 incorporant deux circuits en parallèles 96 (97) à vanne 100, 101 et régulateur 98 (99) aboutissant à deux bouteilles de stockage de gaz d'élution purge 102-102'.

Les bouteilles de stockage que ce soit de gaz à traiter (bouteilles 46 (46'), 47 (47'), ..., de gaz traité 86 (86'), 87 (87'), de gaz d'élution-purge 102 (102') sont ici de simples bouteilles, avec une simple tête de remplissage-soutirage, à passage unique de col, sans tube plongeur ni adsorbant, à la différence des bouteilles d'adsorption 41 et 42 qui sont conformes aux réalisations décrites aux figures 1 et 2. Cependant, ces bouteilles sont également des bouteilles de commerce, de préférence - mais cela n'est pas indispensable - de même structure et capacité normalisées que les bouteilles à partir desquelles sont élaborées les bouteilles d'adsorption 41 et 42.

Toutes ces bouteilles, qu'elles soient d'adsorption ou de stockage sont groupées, avec une conduite et vanne en un ou plusieurs faisceau(x) de bouteilles dans un cadre métallique-support facilement déplaçable par grue et camion.

L'application principale de l'invention est la production d'hydrogène à partir de mélanges industriels incorporant outre l'hydrogène, de l'azote, $CH_4$, CO, $CO_2$, CnHn ou autre mélange à des débits de 20 à 100 $N/m^3/h$, et à des pressions de 1 à 200 bars.

## Revendications

1.  Enceinte d'adsorption (11) pour séparation d'un constituant d'un mélange gazeux, du genre à structure allongée renfermant au moins un produit adsorbant (28) sous forme granulaire et comportant, à une extrémité, des moyens d'admission et de soutirage gazeux assurant une circulation du gaz dans le sens longitudinal (F;F') de l'enceinte et comprenant un premier passage axial formé par un tube plongeur (25) s'étendant dans l'enceinte, et un second passage (26) débouchant à l'intérieur de l'enceinte au niveau de ladite extrémité, caractérisée en ce que l'enceinte est une bouteille de gaz (11) comprenant un col (15) comportant des moyens de montage (16') d'une tête d'admission-soutirage (17) supportant le tube plongeur (25) et définissant partiellement le second passage (26).

2.  Enceinte selon la revendication 1, caractérisée en ce que le second passage (26) est annulaire et coaxial extérieurement au tube plongeur (25).

3.  Enceinte selon la revendication 1 ou 2, caractérisée en ce que le tube plongeur (25) se termine près du fond de bouteille (14) au moyen d'une pluralité de débouchés (31-32) ayant chacun une dimension inférieure à la dimension d'un granulé absorbant.

4.  Enceinte selon la revendication 3, caractérisée en ce que le tube plongeur (25) se termine au voisinage immédiat du fond (4) par une partie (26) de section transversale progressivement restreinte.

5.  Enceinte selon la revendication 3 ou 4, caractérisée en ce que le tube plongeur (25) est constitué de deux tubes (25' et 25") coulissant l'un dans l'autre et présente une extension longitudinale totale substantiellement égale à la hauteur de la bouteille.

6.  Enceinte selon l'une des revendications 1 à 5, caractérisée en ce que le passage d'admission (25 ou 26) est de plus forte section que le passage de soutirage (26 ou 25).

7.  Installation de séparation d'un mélange gazeux, comprenant au moins deux enceintes d'adsorption (41, 42) susceptibles d'être reliées à un circuit d'alimentation en mélange gazeux à traiter (43) et à un circuit de fourniture de gaz traité (89), caractérisé en ce que les enceintes d'adsorption sont du type selon l'une des revendications 1 à 6.

8.  Installation selon la revendication 7, comprenant une capacité (44, 45) de stockage de gaz à traiter et/ou une capacité (84, 85) de stockage de gaz traité, caractérisé en ce que chaque capacité est constituée d'une pluralité de bouteilles de gaz (46-49, 46'-49' ; 86-88, 86'-88') de dimensions normalisées.

FIG.1

FIG.2

# FIG.3

EP 0 444 995 A1

## EP 0 444 995 A1

**Office européen des brevets**

# RAPPORT DE RECHERCHE EUROPEENNE

Numéro de la demande

EP 91 40 0389

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 250 627 (SEITETSU KAGAKU) * Document en entier * | 1,,2,6 | B 01 D 53/04 |
| A |  | 7,8 |  |
| A | FR-A-2 215 544 (PHILIPS' GLOEILAMPENFABRIEKEN) * Figures 1,5; page 4, ligne 9 – page 5, ligne 24; page 7, lignes 5-18 * | 1,2,3,5 |  |
| A | US-A-4 373 938 (N.R. Mc COMBS) | | |
| A | DE-A- 852 538 (METALLGESELLSCHAFT) | | |
| A | US-A-4 162 289 (C.R. GOMEZ) | | |

**DOMAINES TECHNIQUES RECHERCHES (Int. Cl.5)**

B 01 D

Le présent rapport a été établi pour toutes les revendications

| Lieu de la recherche | Date d'achèvement de la recherche | Examinateur |
|---|---|---|
| LA HAYE | 30-05-1991 | BOGAERTS M.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

10